# EUROPÄISCHE PATENTSCHRIFT

(11) **EP 4 221 970 B1**
(45) Veröffentlichungstag und Bekanntmachung des Hinweises auf die Patenterteilung: **29.01.2025**
(21) Anmeldenummer: 21772758.5
(22) Anmeldetag: 31.08.2021
(51) Int. Cl.: B30B 9/22, B01D 29/82, B30B 15/00, C12G 1/00, B30B 15/32

(54) **ANORDNUNG ZUM AUSPRESSEN VON FLÜSSIGKEITSHALTIGEN STOFFEN MIT EINEM FLEXIBLEN PRESSBEHÄLTER**
MODULAR PRESS
PRESSOIR MODULAIRE

(30) Priorität: 30.09.2020 DE 102020125608; 30.09.2020 DE 102020125603
(43) Veröffentlichungstag der Anmeldung: 09.08.2023
(73) Patentinhaber: Willmes Anlagentechnik GmbH, 64653 Lorsch (DE)
(72) Erfinder: KRAMMER, Volker, 69469 Weinheim (DE)
(74) Vertreter: Kesselhut, Wolf
(86) Internationale Anmeldenummer: PCT/EP2021/074021
(87) Internationale Veröffentlichungsnummer: WO 2022/069140

(56) Entgegenhaltungen:
- EP-A1- 0 585 596
- EP-A1- 0 611 173
- CH-A- 412 577
- DE-T2- 69 005 771
- FR-A1- 2 530 424

## Beschreibung

Die Erfindung betrifft eine Anordnung zum Auspressen von flüssigkeitshaltigen Stoffen, insbesondere von Trauben, mit einem flexiblen Pressbehälter gemäß dem Oberbegriff von Anspruch 1.

Pressen zum Auspressen von flüssigkeitshaltigen Stoffen sind beispielsweise aus der WO 03/035381 Al bekannt und werden dazu verwendet, den als Ausgangsstoff zur Weinherstellung verwendeten Traubensaft aus in die Presse eingefüllten Trauben herauszupressen. Die in der WO 03/035381 Al offenbarte Presse weist einen geschlossenen, um seine waagerechte Längsachse in Rotation versetzbaren Behälter auf, dessen Behälterinnenraum durch eine Pressmembran in einen Druckmittelraum und einen Pressmittelraum unterteilt wird, und in dessen Behältermantel eine durch einen Deckel verschließbare Einfüll- und Entleeröffnung angeordnet ist, der ein im Pressraum befindlicher Saftablauf gegenüber liegt. Im Pressmittelraum sind weiterhin über den Durchmesser und im Wesentlichen senkrecht zur Behälterachse angeordnete flüssigkeitsdurchlässige Drainageelemente angeordnet, die sich diametral vom einen Ende des Behälters zum anderen Ende hin erstrecken. Die Drainageelemente weisen ein flexibles Stützelement auf, um welches herum ein saftdurchlässiger Gewebeschlauch angeordnet ist. In der Entsaftungsposition erstrecken sich die Drainageelemente in einer im wesentlichen vertikalen Richtung, um den Saft in einen unterhalb gelegenen Saft-Sammelstutzen zuzuführen, von wo aus er über eine Sammelleitung einem Sammelbehälter zugeleitet wird.

Die in der WO 03/035381 A1 beschriebene Presse ist in gleicher Weise wie alle sonstigen derzeit auf dem Markt befindlichen pneumatischen Frucht- und Traubenpressen als fest montierte Baugruppe ausgeführt und besteht im Wesentlichen aus einem Maschinengestell/Rahmen, an welchem die jeweiligen Funktions-Unterbaugruppen dauerhaft montiert sind.

Weiterhin beschreibt die CH 412577A eine Anordnung zum Auspressen von flüssigkeitshaltigen Stoffen mit einem starren zylindrischen Pressbehälter und einer darin aufgenommenen Membran, welcher stehend ausgeführt ist und um eine horizontal verlaufende Rotationsachse verschwenkt werden kann. Das Dokument gibt keinen Hinweis auf einen Pressbehälter aus druckfestem flexiblem Kunststoffmaterial, welches in einem rotierbaren Stützgestell aufgenommen ist.

Neben der örtlich fixierten Aufstellung mehrerer Pressen können diese auch auf Rollen verfahrbar installiert werden, so dass sich eine Vielzahl von räumlichen Konstellationen ergibt, von denen sich eine linear fixierte Aufstellung hinsichtlich der Beschickung und des Tresterabtransportes als wirtschaftlichste Aufstellungsart etabliert hat.

Ein Problem der bekannten Pressen besteht darin, dass der Pressbehälter als Druckbehälter gem. Druckgeräte-Richtlinie ausgebildet ist, was dessen Fertigung teuer macht. So verwendet der überwiegende Teil der bisher bekannten pneumatischen Pressen für die Erzeugung des zum Auspressen notwendigen Druck-Gradienten atmosphärischen Überdruck (1,2 bis 2bar, in Sonderfällen bis 3bar), mit welchem der Druckmittelraum über Drehdurchführungen beaufschlagt wird. Somit fallen alle mit Druck beaufschlagten Teile des Pressbehälters unter die Druckgeräterichtlinie 2014/68/EU; und die Presse als Baugruppe gilt als "Druckgerät" im Sinne dieser Richtlinie, was neben den erhöhten Kosten für die Herstellung Pressbehälters in nachteiliger Weise auch zu einmaligen und wiederkehrenden Prüfkosten der notifizierten Stellen führt, welche neben den installationsseitigen Sicherheitsmaßnahmen in die Gesamtwirtschaftlichkeitsrechnung einfließen.

Ein weiterer kostenintensiver Aspekt bei der Verwendung von hohen Drücken ist die Erzeugung des Druckmediums in entsprechender Menge.

Ein weiteres Problem der zuvor beschriebenen bekannten Pressen ist darin zu sehen, dass diese in der Regel einen liegenden Pressbehälter besitzen. Dies ist dadurch bedingt, dass die Pressbehälter aller derzeitig bekannten pneumatischen Pressen aufgrund der notwendigen Rotation, einer möglichst hohen Raumausnutzung und einer möglichst einfachen Fertigung im Wesentlichen als liegende Zylinder ausgeführt sind, wobei ein gewalztes Mantelblech zwischen zwei Böden zum Einsatz gelangt. Dies führt dazu, dass die Pressmembrane zwangsläufig als Halbschale ausgeführt ist, wobei je nach Presssystem eine oder auch mehrere Membranen verbaut werden. Allerdings ergeben sich bei den Pressen mit zylindrischen Pressbehältern bedingt durch die Bauform folgende Probleme:
- Schüttkegelbildung des Pressgutes beim Befüllen über die Deckel des Pressbehälters. Aufgrund der länglichen Ausdehnung des zylindrischen Preßbehälters und der begrenzten Anzahl und Größe der Befüll- und Entleerungsöffnungen sowie Deckel bilden sich bei der Befüllung der Presse mit nicht-flüssigem Pressgut Schüttkegel, die die vollständige Befüllung des Produktraumes im Pressbehälter verhindern und nur durch eine Rotation des Pressbehälters vermieden werden können.

- Probleme beim Entleeren der Pressrückstände. Wie bei der Befüllung ist auch bei der Entleerung der Pressrückstände eine nahezu vollständige Entleerung nur durch eine permanente Rotation des Pressbehälters in angemessener Zeit (im Regelfall 10 - 40 Minuten) zu realisieren. Zur Verbesserung der Entleerung werden teilweise zusätzliche spiralförmige Austragselemente, die nach dem Prinzip von Austragsblechen eines Betonmischers arbeiten, eingesetzt, welche neben der Störwirkung für die Pressmembrane (sofern auf der Druckmittelseite montiert) eine kontinuierliche und gleichgerichtete Rotation des Pressbehälters erfordern.
- Probleme bei der vollständigen Entleerung von Reinigungsmedien. Durch die zwangsläufig horizontale Fixierung der Pressmembrane im Mantelbereich des Pressbehälters entstehen oftmals Wülste und Absätze, welche schlecht zu reinigen sind und das komplette Ablaufen von Reinigungswasser bzw. Reinigungsmedien verhindern. Bei unzureichender Spülung können die in den so entstehenden länglichen Pfützen verbleibenden Reinigungsmittel der Pressmembrane großen Schaden zufügen.

Weitere Nachteile ergeben sich bei den zuvor beschriebenen Pressen mit länglichen zylindrischen Pressbehältem zudem oftmals bei der Konfektion der Pressmembrane, deren zuvor beschriebene notwendige Halbschalen-Form das Problem mit sich bringt, dass im Übergangsbereich vom zylindrischen Teil zum halbrunden Bodenbereich das Membranmaterial im Bereich der ca. 3-10 cm breiten Verbindungs-Schweißnaht aufwirft. Dies führt bereits bei der Fertigung der Presse zu Unregelmäßigkeiten in der Oberflächenqualität und Haltbarkeit der empfindlichen Pressmembrane. Zudem wird die Pressmembrane im Pressbetrieb hin- und her gestülpt, was gerade im Bereich der o.g. Bodenschweißnaht zu erhöhten Knickbelastungen des Membranmaterials führt und die häufigste Ursache für Totalschäden an der Pressmembrane darstellt.

Zusätzlich zu den zuvor beschriebenen Unzulänglichkeiten besitzen die bekannten Pressen auch press-physikalische Nachteile. So wurde bei einer Untersuchung der Vorgänge beim Pressen von Trauben unter dem Gesichtspunkt der schonenden Verarbeitung erkannt, dass die Spannungszustände innerhalb der im Wesentlichen kugelförmigen Trauben von der gewählten Geometrie des Presskörpers abhängen. Hierbei ist zur Vermeidung von unnötig hohen Scherkräften innerhalb der Trauben ist ein möglichst von allen Seiten gleichmäßig angreifender Druck erstrebenswert, um das Pressgut möglichst schonend zu pressen und den Austritt von Bitterstoffen durch lokale Druckspitzen zu vermeiden.

Eine weitere Schwierigkeit, welche die Qualität des erzeugten Traubensafts oder allgemein Pressguts nachhaltig beeinträchtigt, besteht darin, dass der beim Pressvorgang entstehende Saft in einer feststehenden Wanne gesammelt wird, die sich unterhalb des rotierbaren Pressbehälters befindet. Je nach Ausführung der Presse wird der Saft zuvor im oder am Pressbehälter aus mehreren Saftabläufen zusammengeführt und während der Rotation bzw. bei Behälter-Stillstand am tiefsten Punkt per Gravitation in die feststehende Wanne geleitet. Dabei ist es zwingend erforderlich, dass der Saft die Strecke zwischen dem Pressbehälter und dem Saftsammelbehälter (Saftwanne) im freien Fall überwindet, da die erforderliche Rotation des Pressbehälters keine abgeschlossene Rohrverbindung erlaubt.

Nachteilig an dieser gravitativen Entleerung des Saftes in die Saftwanne ist dabei die mangelnde Prozeßkontrolle (Spritzen, Schwappen), sowie die unkontrollierte Einwirkung der Umgebungsluft (Oxidation, Temperatur etc.), bzw. die mögliche Verschmutzung durch Staub und insbesondere Insekten, die durch den hohen Zuckergehalt des erzeugten Traubensafts vermehrt angezogen werden und häufig in der Saftwanne verenden.

Um dem entgegen zu wirken ist es zwar bekannt, Kupplungsmechanismen einzusetzen, die im Falle einer zentralen Sammlung des Safts am oder im Pressbehälter den Saft in einer entsprechenden Stellung des Pressbehälters am tiefsten Punkt durch ein mechanisches Ankuppeln, z.B. durch eine Inertgas-Kupplung, unter weitestgehendem Ausschluss von Umgebungsluft zur Sammelwanne leiten. Diese Möglichkeit ist jedoch sehr kosten-, reinigungs- und störungsintensiv.

Eine weitere Unzulänglichkeit, die sich durch zuvor beschriebene gravitativ Ableitung des gepressten Traubensafts aus dem Pressbehälter ergibt, besteht darin, dass sich die Bauhöhe der Presse insgesamt maßgeblich vergrößert. Aufgrund der oben beschriebenen Bauweisen erhöht das gravitative Ableiten und zentrale Sammeln des Produktes innerhalb einer Sammelwanne die Gesamthöhe der Presse um ca. 300 bis 1000 mm, was beim Aufstellen eine vergrößerte Gebäudehöhe erfordert und dadurch bei bestehenden Gebäuden oftmals zu Problemen führen kann.

Neben der vergrößerten Bauhöhe besitzen die zuvor beschriebenen Pressen konstruktionsbedingt einen erhöhten Platzbedarf. Dies ist darauf zurück zu führen, dass der Pressbehälter, der mit ca.75 - 85% den größten Teil des Aufstellungsraumes einnimmt, ständig mit dem Rahmen und den daran aufgenommenen Baukomponenten verbunden ist. Bei mehreren Pressen addiert sich hierzu der Bauraum, der für die Versorgungsaggregate benötigt wird, welche für jede einzelne Presse notwendig sind.

Weiterhin ergibt sich das Problem, dass neben der auf das Jahr gesehen sehr geringen Nutzung der Pressen auch während der Pressung die Nutzung der verbauten Aggregate aufgrund des nicht kontinuierlichen Pressvorganges relativ gering ist. Die führt dazu, dass der Antriebsmotor für die Behälter-Rotation nur ca. alle 3-5 Minuten für ca. 2 Minuten in Betrieb. Bei entsprechenden Pressprogrammen vergrößert sich das Intervall mitunter sogar auf alle 15-30 Minuten, was einer Auslastung von lediglich ca. 10-40% entspricht. Ferner wird das Aggregat zum Umlegen Membrane in der Regel ebenfalls nur ca. alle 3-5 Minuten für ca. 2 Minuten in Betrieb genommen, was einer Auslastung von ca. 30-40% entspricht. Darüber hinaus sind die Steuerung (SPS) und das HMI für die Automatisierung und Visualisierung des Prozesses ebenfalls nur teilweise ausgelastet (ca. 30%).

Wie die Anmelderin weiterhin erkannt hat, entsteht eine weitere Unzulänglichkeit dadurch, dass die Presse als Maschine innerhalb des Produktionsprozesses eingesetzt wird und in einem diskontinuierlichen Verarbeitungsprozess betrieben wird. In diesem Zusammenhang ist allen pneumatischen Pressen mit Druckbehältem gemeinsam, dass der systembedingte Verarbeitungsprozess, die nachfolgenden Arbeitsschritte umfasst:
1. Befüllung (Dauer: zwischen 2min und 2 Stunden)
2. Pressvorgang (Dauer: zwischen 60min und 4 Stunden)
3. Entleerung der Pressrückstände (Dauer: zwischen 10 und 30 Minuten)
4. Reinigung des Pressbehälters (Dauer: zwischen 15 und 30 Minuten im Falle einer Schnellreinigung)

Nach einer Befüllung der Presse kann demnach für ca. 2 - 6 Stunden keine weitere Befüllung der Presse erfolgen. Im Falle einer kontinuierlichen Pressgut-Anlieferung kann mit einer einzelnen Presse folglich nicht kontinuierlich gearbeitet werden. In der Praxis muss für eine kontinuierliche Verarbeitung eine der Befüll-Leistung angepasste Anzahl von Pressen und ein entsprechend variables Befüll-Transportsystem bereitgestellt werden. So wurde von der Anmelderin gefunden, dass für die Erzielung einer kontinuierlichen Befüllung z.B. 7 Pressen erforderlich sind, um sicher zu stellen, dass die erste Presse nach ca. 4 Stunden wieder befüllt werden kann.

Einen weiteren Nachteil der bisher bekannten Pressen mit Druckbehältern aus Stahl stellt die temporäre monofunktionale Nutzung der Pressen dar. So werden die Pressen innerhalb des gesamten Produktionsprozesses der Pressgutverarbeitung lediglich für die Pressung, d.h. die Trennung der flüssigen Bestandteile von den festen Bestandteilen des Pressguts (im Lebensmittelbereich: Trauben, Kräuter, Früchte, Obst etc.) eingesetzt, welcher bei der Traubenverarbeitung während der Lesezeit (ca. 4 bis 6 Wochen pro Jahr) 1 bis 4x pro Tag stattfindet. Gelegentlich findet die Presse auch für den Mazerations-Vorgang (temporäre Lagerung/Einwirkung der Traubenmaische vor der Pressung für ca. 3-20 Stunden) Verwendung. Die restliche Zeit während der Lese bzw. des Jahres sind die Pressen inklusive des Behältervolumens ungenutzt. Weitere Einsatzmöglichkeiten innerhalb des Produktionsprozesses sind aufgrund der geschlossenen Bauweise als komplett-Baugruppe nur begrenzt bis gar nicht möglich.

Schließlich besteht ein weiteres Problem darin, dass die Verarbeitungskapazität der Pressen aufgrund ihres Aufbaus in erster Linie durch die Größe des Pressbehälters bestimmt werden, was die Möglichkeit einer Anpassung der Verarbeitungskapazität bei einer bestehenden Presse in der Regel ausschließt. Allerdings stellen bei der Dimensionierung einer Verarbeitungsanlage die Wahl der Pressengröße und die Anzahl der verwendeten Pressen ein entscheidender Bestandteil der Wirtschaftlichkeits-Betrachtung dar, so dass die Verarbeitungskapazität einer Presse nach Möglichkeit so gut wie möglich auf die anfallende Menge an zu verarbeitendem Pressgut abgestimmt sein sollte . Dabei ist das Zusammenspiel von Verarbeitungsart, Anliefermenge, Dauer und Art der Presszyklen, Tresterabtransport, Reinigung und Platzbedarf genau auf den gewünschten aktuellen und zukünftigen Bedarf eines Betriebes abzustimmen. Beispielsweise führt der Einsatz von zu großen Pressen, welche nur teilweise befüllt werden können, zu erhöhten Anschaffungskosten sowie einem erhöhten Zeit- und Energiebedarf. Zugleich kann die Konstanz der Verarbeitung des Pressgutes bei nicht hinreichend gefüllter Presse nicht gewährleistet werden. Die Auslastung der vorhandenen Pressen ändert sich zudem aufgrund der z.B. witterungsbedingt schwankenden Annahme-Mengen an Pressgut, sodass Kleinmengen vorteilhafterweise nur mit kleineren Pressen verarbeitet werden, was den Einsatz unterschiedlicher Pressengrößen erfordert.

Erweiterungen der Presskapazitäten sind darüber hinaus meist nur durch den Einsatz zusätzlicher Pressen möglich, was zu teilweise erheblichen baulichen Veränderungen und damit verbundenen Kosten führt.

Der Nachteil, dass mehrere Pressegrößen für unterschiedliche Verarbeitungsmengen/Sortierung notwendig sind führt entweder zu einer geringeren Auslastung oder aber zu Verarbeitungsengpässen, da der Prozess der Lese des Pressguts naturbedingt nicht genau genug gesteuert werden kann.

Demgemäß ist es eine Aufgabe der vorliegenden Erfindung, eine Anordnung zum Auspressen von flüssigkeitshaltigen Produkten, insbesondere Trauben oder Früchten, zu schaffen, welche die zuvor beschriebenen Unzulänglichkeiten des Standes der Technik vermeidet.

Diese Aufgabe wird erfindungsgemäß durch eine Anordnung mit den Merkmalen von Anspruch 1 gelöst.

Die Erfindung wird nachfolgend mit Bezug auf die Zeichnungen beschrieben. In den Zeichnungen zeigen:
- Fig. 1: eine schematische räumliche Darstellung der erfindungsgemäßen Anordnung in der Press- und Befüllstellung,
- Fig. 2: eine Seitenansicht der Anordnung von Fig. 1 nach dem Verschwenken um ca. 225 ° entgegengesetzt zum Uhrzeigersinn,
- Fig. 3: eine Ansicht der gegenüberliegenden Seite der Anordnung von Fig. 2,
- Fig. 4: eine schematische Querschnittsansicht der Anordnung mit in einer Wendeeinheit aufgenommenen Pressbehälter mit aufgestelltem trichterförmigem Verschlussdeckel und angedeuteter Pressmembran und Drainagelement,
- Fig. 5: eine Seitenansicht der erfindungsgemäßen Anordnung von Fig. 4,
- Fig. 6: eine schematische Querschnittsansicht des als transportable Einheit ausgeführten mobilen Pressbehälters mit geöffnetem Verschlusstrichter vor dem Befüllen mit Pressgut,
- Fig. 7: eine schematische räumliche Aufsicht auf den transportablen mobilen Pressbehälter von Fig. 6,
- Fig. 8: den Pressbehälter von Fig. 7 in der Verschlussstellung nach dem Rotieren des oberen Randes des Verschlusstrichters entgegengesetzt zum Uhrzeigersinn und Einhaken der flügelartigen Laschen in die hakenförmigen Eingriffselemente am Stützgestell,
- Fig. 9: eine Aufsicht auf den verschlossenen Verschlusstrichter zur Verdeutlichung der überlappend angeordneten Wandabschnitte,
- Fig. 10: eine schematische Darstellung der Leitungsanordnung und Ventilstellung für die Unterdruck- und Überdruckversorgung beim Anlegen der Pressmembran,
- Fig. 11: eine schematische Darstellung der Leitungsanordnung und Ventilstellung beim Pressvorgang mit Unterdruck und Überdruck,
- Fig. 12: eine schematische Darstellung der Leitungsanordnung und Ventilstellung beim Pressvorgang mit reduziertem Saftfluss, und
- Fig. 13: eine weitere Ausführungsforin eines flexiblen Pressbehälters.

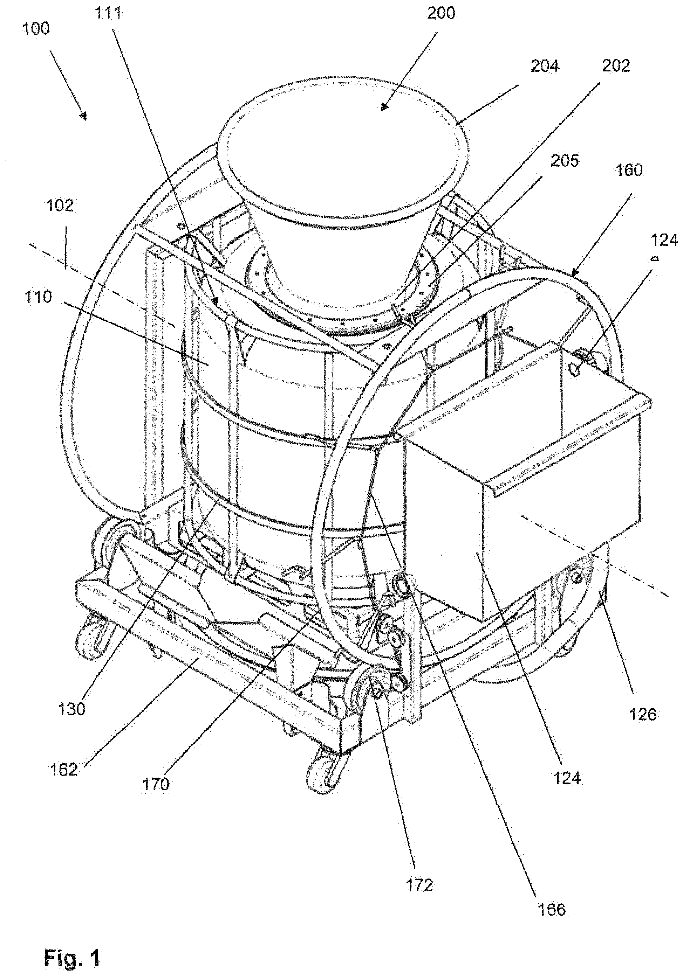

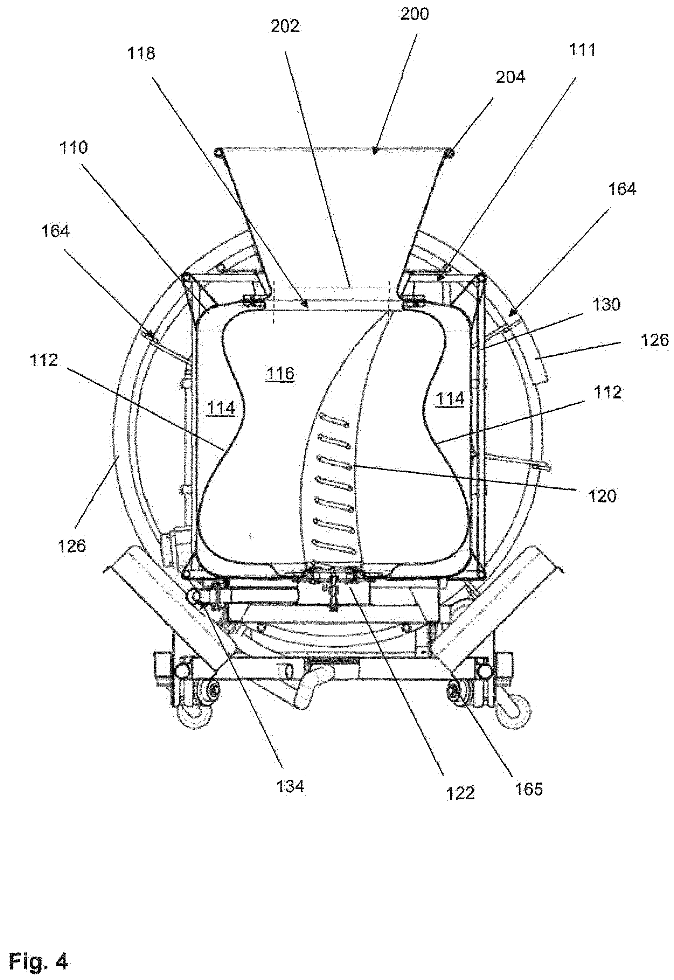

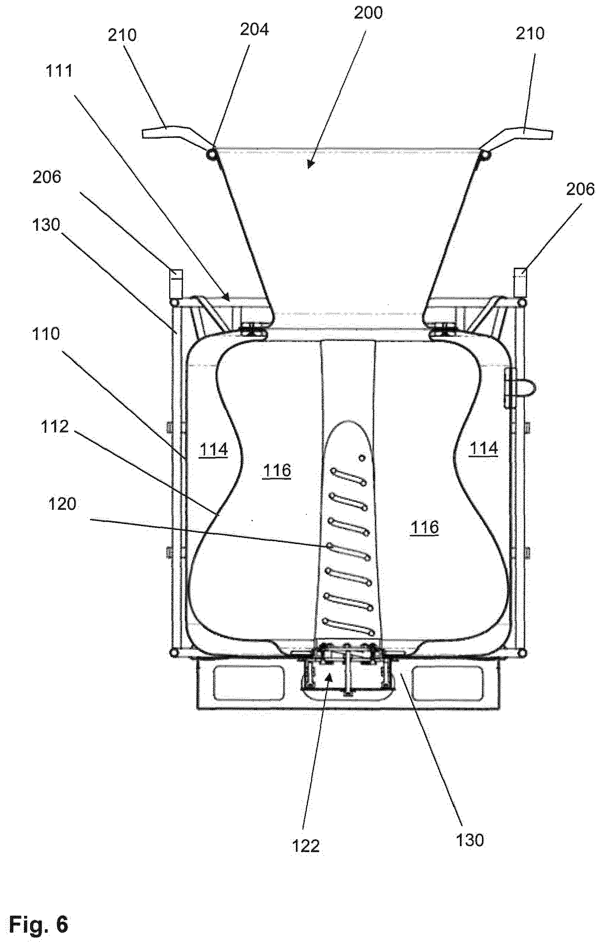

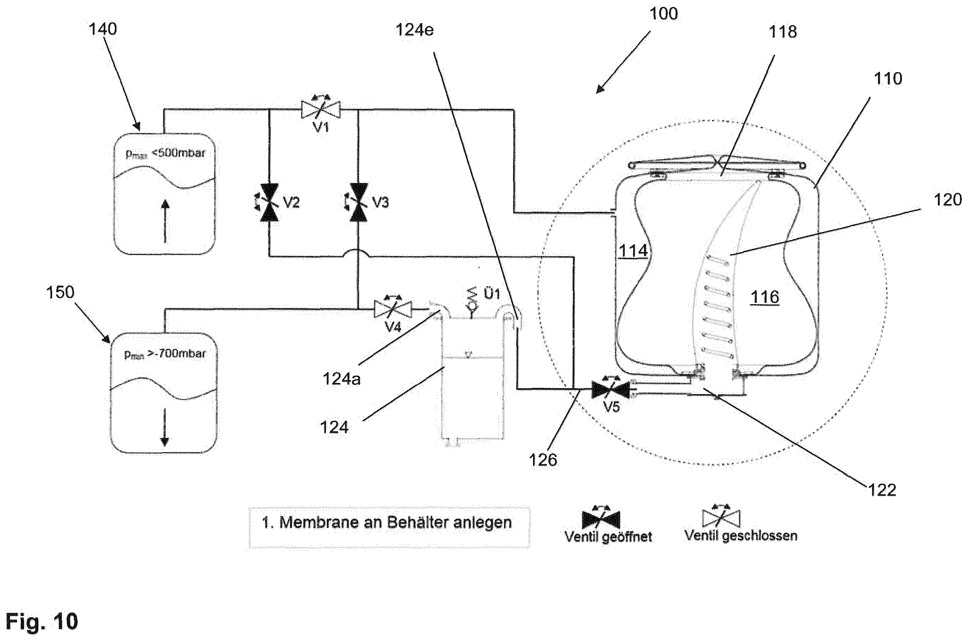

Wie in den Figuren 1 bis 12 gezeigt ist, umfasst eine Anordnung 100 zum Auspressen von flüssigkeitshaltigen Stoffen, wie Weintrauben oder Früchten, einen um eine Drehachse 102 rotierbaren Pressbehälter 110, dessen Behälterinnenraum durch eine Pressmembran 112 in einen Druckmittelraum 114 und einen Pressmittelraum 116 unterteilt ist. Im Pressbehälter 100, ist eine druckdicht verschließbare Befüll- und Entleeröffnung 118 angeordnet, über welche das flüssigkeitshaltiges Pressgut in den Pressmittelraum 116 einfüllbar ist. Im Pressmittelraum 116 ist wenigstens ein in Fig. 4 und 6 gezeigtes Drainageelement 120 angeordnet ist, dessen Innenraum mit einem Saftablauf 122 des Pressbehälters 110 kommuniziert, über den flüssiger Saft während eines Pressvorgangs einem Saftsammelbehälter 124 zugeführt wird, wie dies z.B. in Fig. 10 angedeutet ist.

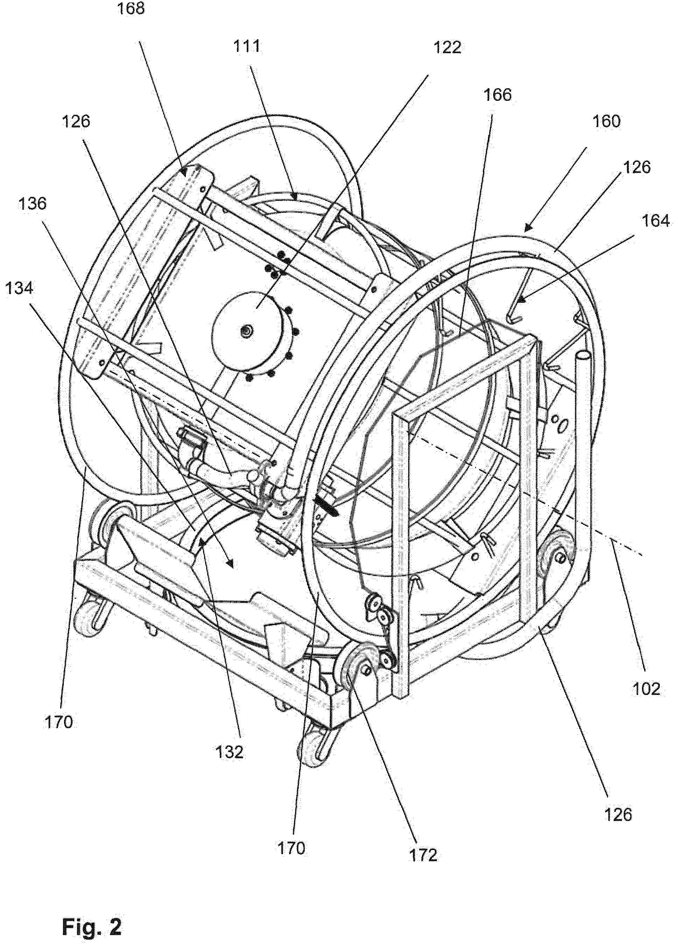

Der Pressbehälter 110 besteht erfindungsgemäß aus einem druckfesten und flüssigkeitsundurchlässigem flexiblen Kunststoffmaterial, insbesondere einem beschichteten luftundurchlässigen Kunststoff- oder Textilgewebe, wie dies z.B. bei LKW-Planen oder auch bei den Pressmembranen der bekannten Membranpressen zum Einsatz gelangt. Der Werkstoff kann jedoch auch ein von sogenannten Stand Up Paddling Boards her bekanntes, mit Kunststoff beschichtetes, ein oder auch mehrlagiges Gewebematerial sein, welches Drücken von 1,5 bar und mehr standhält. Das druckfeste flexible Kunststoffmaterial ist durch ein entsprechendes Vernähen und/oder Verkleben zu einem sackartigen geschlossenen Behälter 110 geformt, der im expandierten Zustand bevorzugt die Form einer Tonne oder auch einer Kugel besitzt, wie dies in Fig. 1 und 6 angedeutet ist. Der druckfeste Behälter 110 aus flexiblem Kunststoffmaterial ist in einem bevorzugt korbartigen Stützgestell 130 aufgenommen, welches um eine in Fig. 2 angedeutete Drehachse 102 in entgegengesetzte Drehrichtungen über einen nicht näher gezeigten Motor rotiert werden kann.

Die Anordnung 100 weist eine mit dem Druckmittelraum 114 über eine Druckluftzuleitung 142 verbindbare Überdruckquelle 140 auf, über die der Druckmittelraum 114 während eines Pressvorgangs mit einem Überdruck beaufschlagt werden kann, der bevorzugt auf maximal 0,5 bar beschränkt ist. Hierdurch entfallen die aufwendigen fortlaufenden Druckprüfungen, die bei Druckbehältem aus Sicherheitsgründen vorgeschrieben sind, wenn diese mit einem Überdruck von mehr als 0,5 bar beaufschlagt werden.

Um dennoch im Pressmittelraum 116, in welchen das auszupressende flüssigkeitshaltige Produkt, z.B. Trauben eingefüllt wird, einen hinreichend hohen Pressdruckdruck von mehr als 1 bar zu erreichen, mit welchem die Pressmembran 112 auf das Produkt drückt, der bei Membranpressen bekannter Weise erforderlich ist, um einen hinreichende Menge an Saft aus dem Produkt auszutreiben, umfasst die Anordnung 100 weiterhin eine Unterdruckquelle 150. Diese beaufschlagt den Pressmittelraum 116 bei angelegtem Überdruck gleichzeitig mit einem Unterdruck zwischen -0,1 bis -0,9 bar, wobei die Höhe des Überdrucks im Druckmittelraum 114 und Unterdrucks im Pressmittelraum 116 in Abhängigkeit vom jeweiligen Pressgut sowie der Anzahl der vorhergegangenen Pressvorgänge während eines Presszyklus gewählt wird, wie dies von Membranpressen her bekannt ist. Der Pressbehälter 110 wird zwischen zwei Pressvorgängen eines Presszyklus aus der in Fig. 1 gezeigten Betüllstellung in Vor- und Rückwärtsrichtung um die Drehachse 102 rotiert wird, um das im Pressbehälter 110 verblieben Restpressgut aufzulockern und den darin enthaltenen Saft dem Drainageelement 120 zuzuführen, durch dessen Siebgewebe hindurch der Saft dann in bekannterweise in den Saftablauf 122 eintritt, über welchen dieser dem Saftsammelbehälter 124 zugeführt, insbesondere in diesen hinein abgesaugt wird.

Wie von der Anmelderin erkannt wurde, ist das zuvor beschriebene erfindungsgemäße Prinzip den Pressmittelraum mit einem Unterdruck von weniger als 0 bar und den Druckmittelraum gleichzeitig mit einem Überdruck von maximal 0,5 bar zu beaufschlagen grundsätzlich bei allen bekannten Membranpressen anwendbar, beispielsweise bei den in der WO 03/035381 A1 offenbarten Pressen, die einen Pressbehälter aus Metall besitzen. Hierdurch lassen sich bei älteren Pressen erfindungsgemäß die aufwändigen Druckprüfungen vermeiden, die über die Lebensdauer einer solchen Presse hinweg zu beachtlichen Wartungskosten führen.

Dennoch wird das der Erfindung zugrunde liegende Prinzip bevorzugt in Verbindung mit Membranpressen eingesetzt, die einen zuvor beschriebenen Pressbehälter aus einem druckfesten flexiblen Kunststoffmaterial besitzen, dessen Saftablauf 122, wie in Fig. 2 gezeigt, während eines Pressvorgangs über einen flexiblen, unterdruckfesten Schlauch 126 strömungsmäßig mit dem Saftsammelbehälter 124 verbunden ist, um die teuren und aufwendig zu reinigenden Drehdurchführungen zu vermeiden, die sonst bei den Pressen des Standes der Technik mit liegendem Pressbehälter für die Ableitung des flüssigen und sehr zuckerhaltigen Safts aus dem Saftablauf 122 zum Saftsammelbehälter 124 benötigt werden.

Bei einer bevorzugten Ausführungsform der Erfindung ist der Saftsammelbehälter124 zur Erzeugung des Unterdrucks im Pressmittelraum 116 während eines Pressvorgangs mit der Unterdruckquelle 150 verbunden, die insbesondere einer Membranpumpe ist, die eine spülbare Kammer besitzt und den Unterdruck direkt erzeugt. Bei der bevorzugten Ausführungsform der Erfindung umfasst die Anordnung jedoch eine Doppelmembranpumpe (nicht gezeigt), deren Saugseite die Unterdruckquelle 150 und deren Druckseite die Überdruckquelle 140 bildet. Hierdurch kann der Bedarf an Pumpen zur Erzeugung des Über- und Unterdrucks in vorteilhafter Weise auf die Hälfte reduziert werden.

Alternativ kann die Unterdruckquelle 150 eine bekannte Schlauchpumpe sein, welche mechanisch auf einen mit dem Saftablauf 122 verbundenen flexiblen, bzw. elastischen Schlauchabschnitt wirkt, welcher entweder ein Teilabschnitt des flexiblen Schlauchs 126 ist, oder aber ein eigens dafür in die Zuleitung zum Saftsammelbehälter 124 integrierter elastischer und unterdruckfester Schlauchabschnitt sein kann, um den flüssigen Saft und im Pressmittelraum 116 befindliche Luft während eines Pressvorgangs vom Saftablauf 122 in den Saftsammelbehälter 124 zu fördern.

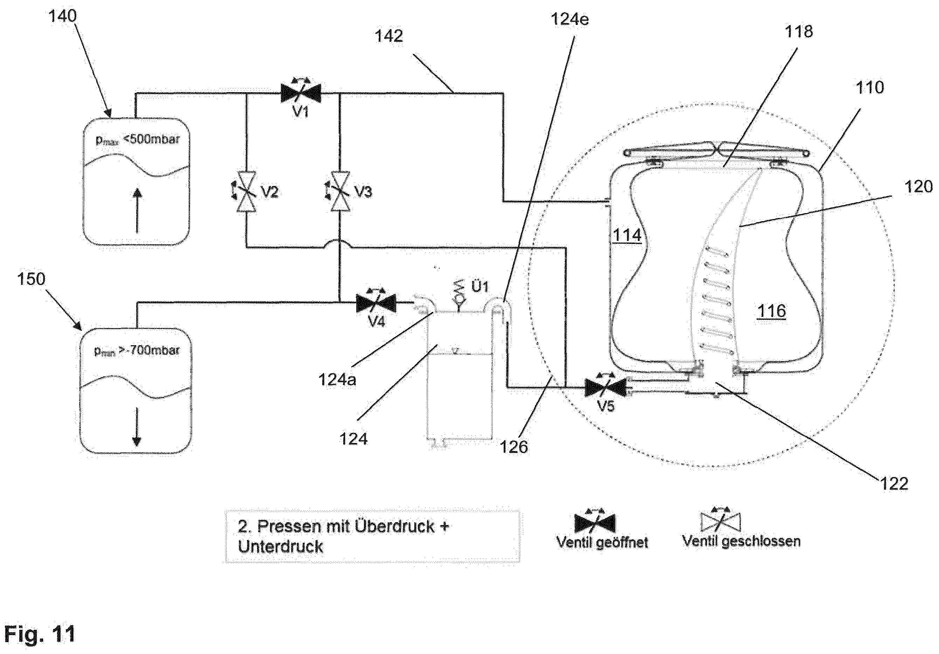

Bei einer bevorzugten Ausführungsform der Erfindung kann die die Überdruckquelle 140 wie in Fig. 10 gezeigt, über ein erstes Ventil V1 und eine erste Zuleitung mit dem Druckmittelraum114 und über einen zwischen der Überdruckquelle 140 und dem ersten Ventil V1 angeordneten Abzweig sowie eine vom Abzweig zum Pressmittelraum 116 führende, durch ein zweites Ventil V2 sperrbare zweite Überdruckleitung strömungsmäßig mit dem Pressmittelraum 116 verbindbar sein. Die Unterdruckquelle 150 ist weiterhin über eine vierte Zuleitung und ein in dieser angeordnetes viertes Ventil V4 mit einer Luftabsaugöffnung 124a im Saftsammelbehälter 124 verbindbar; und im Saftsammelbehälter 124, der als Unterdruckbehälter ausgeführt ist, ist bevorzugt oberhalb des Flüssigkeitsniveaus eine Safteinlassöffnung 124e geformt, die über eine fünfte, durch ein fünftes Ventil V5 sperrbare Zuleitung mit dem Pressmittelraum 116 verbunden werden kann, wie dies in Fig. 11 gezeigt ist, welches die Ventilstellung der zuvor beschriebenen Ventilanordnung beim gleichzeitigen Pressen mit Überdruck von < 0,5 bar im Druckmittelraum und Unterdruck von 0 bis zu 950 mbar im Pressmittelraum 116 zeigt.

Nach einer weiteren Ausführungsform kann es ferner vorgesehen sein, dass die zweite Überdruckleitung über einen in der fünften Zuleitung angeordneten zweiten Abzweig und das zweite Ventil V2 mit der Überdruckquelle 140 verbindbar ist, und die erste Überdruckleitung über einen zwischen dem ersten Ventil V1 und dem Druckmittelraum 114 angeordneten dritten Abzweig und eine dritte, durch ein drittes Ventil V3 sperrbare Zuleitung strömungsmäßig mit der Unterdruckquelle 150 verbindbar ist, um den Pressmittelraum 116 bei geschlossenem ersten Ventil V1 und geschlossenem vierten Ventil V4 sowie geöffnetem zweiten Ventil V2, dritten Ventil V3- und fünften Ventil V5 zum Anlegen der Pressmembrane 112 an die Innenwand des flexiblen Pressbehälters 110, wie in Fig. 10 gezeigt, vor dem Einfüllen von Pressgut mit einem Überdruck zu beaufschlagen. Durch diese in Fig. 10 angedeutete Stellung der Ventile V1 bis V5 wird Luft vom Druckmittelraum 114 über das Ventil V3 abgesaugt und gleichzeitig der Pressmittelraum 116 über die Ventile V2 und V5 mit Druckluft oder wahlweise Inertgas mit geringem Druck beaufschlagt, so dass die Kontur der Behälter-Außenwand erhalten bleibt. Gleichzeitig wird durch das zwischen der Pressmembrane 112 und der Innenwand des flexiblen Pressbehälters 110 anliegende Vakuum zwischen diesen eine sehr steife Einheit gebildet, die den Pressbehälter 110 stabilisiert und das Einfüllen des Pressguts durch die außerhalb des Einfüllbereichs angeordnete Pressmembrane 112 trotz des flexiblen Behälterwerkstoffs erheblich erleichtert, wie die Anmelderin in Versuchen erkennen konnte.

Für die Durchführung eines Pressvorgangs werden die Ventile V1 bis V5 aus der nicht gezeigten Grundstellung, in der alle Ventile geschlossen sind, in die in Fig. 10 gezeigte Stellung bewegt, um die Pressmembrane 112 wie zuvor beschrieben an die Behälterinnenwand anzulegen. Hierbei wird saubere Druckluft und keine Kompressor-Luft, aus einem nicht gezeigten Puffertank oder direkt durch ein Gebläse oder eine großvolumige Membranpumpe als Überdruckquelle 140 mit max. 500 mbar in den Druckmittelraum eingeleitet. Der Unterdruck wird beispielsweise aus einem nicht gezeigten Unterdruck-Puffertank zugeführt oder durch eine zuvor beschriebene Membranpumpe mit einer bevorzugt spülbaren Kammer als Unterdruckquelle 150 direkt erzeugt. Weiterhin kann der Saftsammelbehälter 124 ein in den Figuren 10 bis 12 angedeuteten Überdruckventil Ü1 besitzen, um in der in Fig. 10 angedeuteten Stellung der Ventile V1 bis V5 einen durch das geöffnete Ventil V2 im Saftsammelbehälter erzeugten Überdruck abzuleiten.

In Fig. 11 ist die Ventilstellung beim Pressen mit gleichzeitigem Überdruck und Unterdruck gezeigt, in der Druckluft über das Ventil V1 in den Druckmittelraum geleitet und Unterdruck über die Ventile V4 und V5 auf den Pressmittelraum 116 gegeben wird, so dass Saft und im Pressmittelraum befindliche Luft in den Saftsammelbehälter 124 gesaugt und dort abgeschieden werden. Wenn in diesem Falle bei einem Pressvorgang am Ende eines Presszyklus wenig Saft in den flexiblen Schlauch 126 eintritt, wird dieser nicht mehr gefördert, da keine ausreichende Volumenänderung mehr stattfindet.

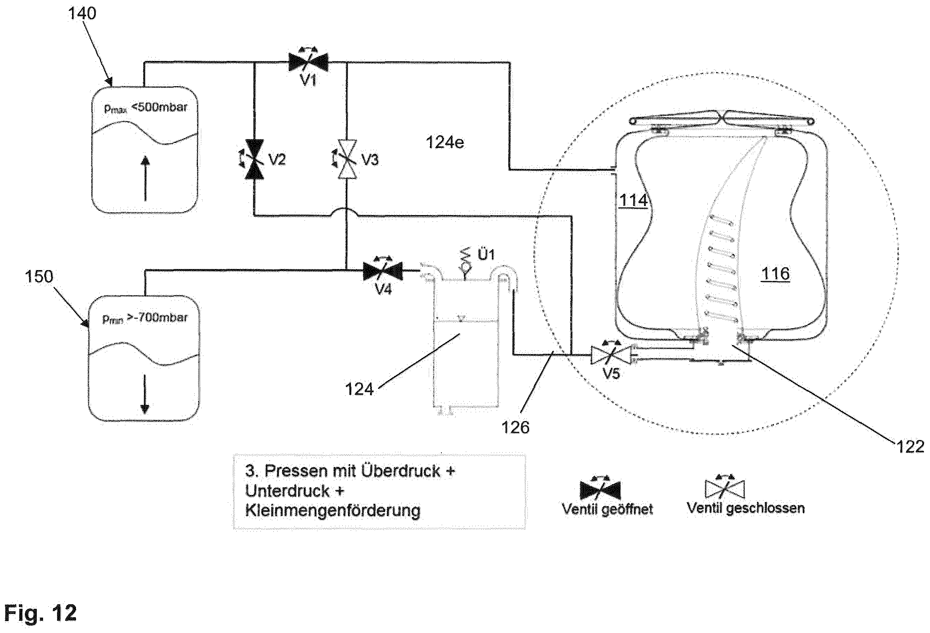

In diesem Fall erfolgt das Pressen in dem sich anschließenden Pressvorgang mit einer in Fig. 12 angedeuteten Stellung der Ventile V1 bis V5.

Bei geringen Saftmengen, die z.B. über Flüssigkeitssensoren im Saftsammelbehälter 124 erfasst werden, wird die im flexiblen Saftschlauch 126 befindliche Saftmenge durch mehrmaliges Schließen des Ventils V5 und gleichzeitiges Öffnen des Ventils V2 in die Saftsammelwanne 124 gesaugt, oder alternativ bei gleichzeitigem Verschließen von Ventil V4 gedrückt.

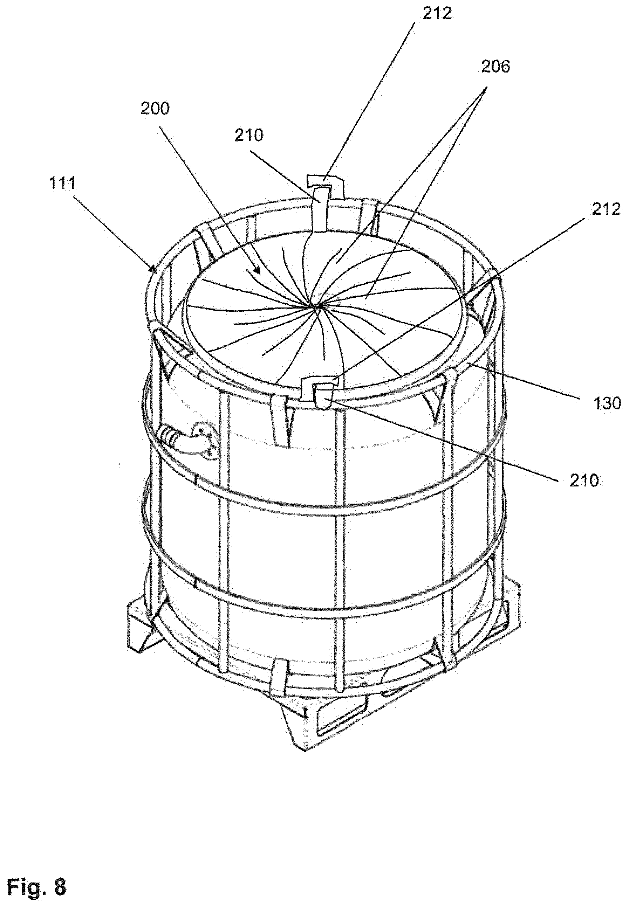

Bei einer bevorzugten Ausführungsform der Erfindung bilden das bevorzugt korbförmige Stützgestell 130 und der darin aufgenommene und an diesem über nicht näher bezeichnete Schlaufen gehaltene Pressbehälter 110 aus flexiblem Kunststoff-Folienmaterial einen mobilen Press- und Transportbehälter 111, welcher als Einheit eigenständig lager- und transportierbar ist, so dass dieser in einem Weinberg abgestellt, von Hand über die Befüll- und Entleeröffnung 118 mit Trauben oder Früchten befüllt und nach dem Verschließen der Befüll- und Entleeröffnung 118 mit einem herkömmlichen massiven druckfesten Verschlussdeckel oder dem nachfolgend noch näher beschriebenen trichterförmigen Verschlussdeckel 200 zum Pressen in einen Keltereibetrieb oder dgl. verbracht werden kann. Ein solcher mit einem trichterförmigen Verschlussdeckel 200 verschlossener mobiler Press- und Transportbehälter 111 ist exemplarisch in Fig. 8 gezeigt.

Der gefüllte, und durch den Deckel 200 an seiner Oberseite verschlossene mobile Press- und Transportbehälter 111 wird anschließend bevorzugt mit Hilfe eines Gabelstaplers ergriffen, wozu am Boden des Stützgestells 130 zwei nicht näher bezeichnete Öffnungen geformt sein können, in die die Hubgabeln eines Gabelstaplers eingeführt werden können, um den befüllten mobilen Press- und Transportbehälter 111 einschließlich dem Stützgestell 130 anzuheben und seitlich in eine in Fig. 1 gezeigte Wendeeinrichtung 160 einzuschieben.

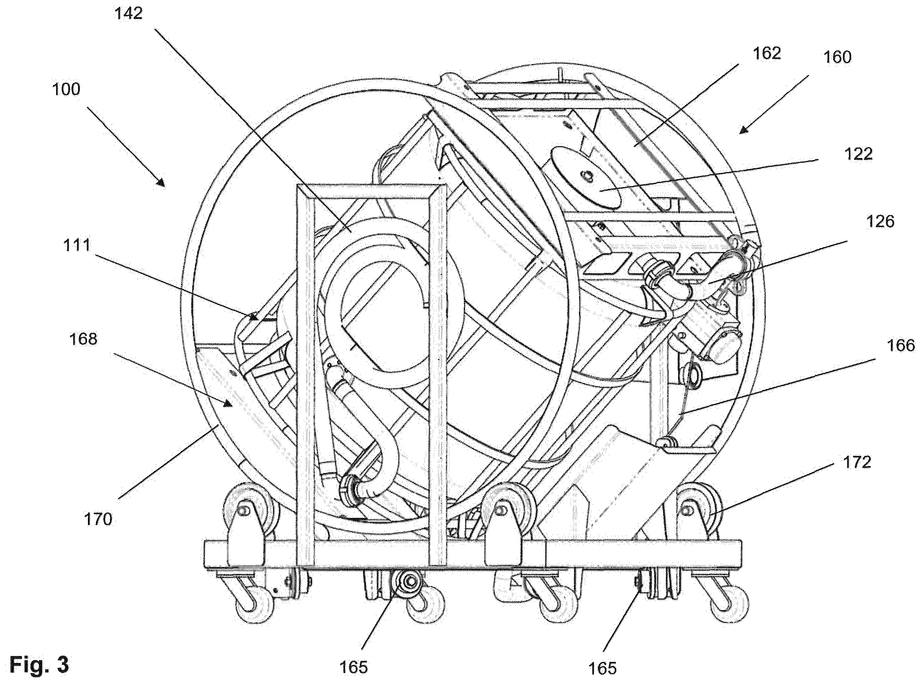

In der Wendeeinrichtung 160 wird der mobile Press- und Transportbehälter 111 dann nach einem Pressvorgang zur Auflockerung des Pressguts aus einer in Fig. 1 gezeigten Befüllstellung, die auch der Entsaftungsstellung während eines Pressvorgangs entspricht, in der sich die Einfüll- und Entleeröffnung 118 an der Oberseite des Behälters 111 befindet, um einen begrenzten Drehwinkel von bevorzugt jeweils weniger als 360°, insbesondere um weniger als 270°, in zueinander entgegengesetzten Drehrichtungen um eine Drehachse 102 rotiert, wie dies in Fig. 2 und 3 angedeutet ist.

Um nach dem Einsetzen des Stützgestells 130 mit dem darin aufgenommenen gefüllten flexiblen Pressbehälter 110, d.h. des mobilen Press- und Transportbehälters 111, in die Wendeeinrichtung 150 eine dauerhafte Leitungsverbindung zwischen dem Saftablauf 122 und dem Saftsammelbehälter über einen gesamten Presszyklus mit bis zu 10 Pressvorgängen und Rotationen aufrecht zu erhalten, wird der Saftablauf 122 zu Beginn eines Presszyklus über eine bekannte Schlauchkupplung mit dem flexiblen und unterdruckfesten Schlauch 126 verbunden, dessen stromaufwärtiges Ende mit der Safteinlassöffnung 124e des Saftsammelbehälters gekoppelt wird.

Diese dauerhafte Kopplung des Saftablaufs 122 mit dem Saftsammelbehälter 124 über den flexiblen Schlauch 126 während eines vollständigen Presszyklus hinweg führt dazu, dass der ausgepresste flüssige Saft nicht oder nahezu nicht mit Umgebungsluft und darin enthaltenen Schmutz- und Staubteilchen, bzw. Insekten in Berührung kommt, wodurch die Qualität des erhaltenen Traubensafts - und entsprechend des daraus gewonnenen Weins - erheblich gesteigert wird.

Um den flexiblen Schlauch 126 während des Verschwenkens des Pressbehälters 110 in der Wendeeinrichtung 150 entsprechend dem jeweils gewählten Rotationswinkel nachzuführen, umfasst die Wendeeinrichtung 150 eine Aufrolleinrichtung 132 zur Aufnahme des flexiblen Schlauchs 126. Die Aufrolleinrichtung 132, weist eine unterhalb des Saftablaufs 122 angeordnete Schlauchaufnahmetrommel 134 auf, welche eine Durchtrittsöffnung 136 besitzt. Durch diese hindurch wird das ausgepresste Pressgut (Trester) nach dem letzten Pressvorgang am Ende eines Presszyklus bei geöffneter Befüll- und Entleeröffnung 118 nach dem Rotieren des Pressbehälters 110 in eine Entleerstellung, in der sich die Befüll- und Entleeröffnung 118 an der Unterseite des Pressbehälters 110 befindet, in eine nicht näher gezeigte Auffangwanne oder dgl. geschüttet. Durch die erfindungsgemäße horizontale Anordnung der reifenartigen Schlauchaufnahmetrommel 134 unterhalb des Saftablaufs 122 ergibt sich der Vorteil, dass die Aufrolleinrichtung 132 bauhöhen-neutral angeordnet ist, der flexible Schlauch 116 beim Entleeren des Tresters nicht im Wege ist, und der Saftablauf 122 beim Pressen stets an der tiefsten Stelle der Wendeeinrichtung 160 liegt und dadurch das Schlauchvolumen mit als Puffer-Reservoir für den Saft genutzt werden kann.

Die Schlauchaufnahmetrommel 134 ist über in Fig. 3 erkennbare Rollen 165 in einer horizontalen Ebene rotierbar an der Wendeeinrichtung 160, insbesondere an deren Tragrahmen 162 aufgenommen. Weiterhin ist in der Wendeeinrichtung 150 eine koaxial zur Drehachse 102 des Pressbehälters 110 angeordnete, bevorzugt drehfest mit der Aufnahme der Wendeeinrichtung 160 gekoppelte Schlauchführungseinrichtung 164 vorgesehen, entlang welcher der flexible Schlauch 126 beim Verschwenken des Pressbehälters 110 um die Drehachse 102 herum bewegt wird. Die Schlauchaufnahmetrommel 134 der Aufrolleinrichtung 132 ist mit der Schlauchführungseinrichtung 164 mechanisch über ein insbesondere über eine Spiralzugfeder vorgespanntes und über Rollen umgelenktes Zugseil 166 gekoppelt, welches die Rotationsbewegung des Pressbehälters 110 in der Wendeeinrichtung 160 in eine korrespondierende Drehbewegung der Schlauchaufnahmetrommel 134 überführt, so dass der gegenläufig zur Schlauchführungseinrichtung 164 auf die Schlauchaufnahmetrommel 134 gewickelte flexible Schlauch 126 beim Verschwenken des Pressbehälters 110 in der Wendeeinrichtung 160 definiert entlang der Schlauchführungseinrichtung 164 bewegt wird. Gleichzeitig wird durch die mechanische Kopplung der Drehbewegung des Behälters 110 mit der Drehbewegung der Schlauchaufnahmetrommel 134 der außerhalb der Schlauchführungseinrichtung 164 befindliche Schlauchteil mit einer entgegengerichteten Zugkraft beaufschlagt und dadurch der flexible Schlauch 116 auf der Schlauchaufnahmetrommel 134 gespannt und gehalten.

Wie bereits zuvor ausgeführt wurde und in den Figuren 1 bis 3 gezeigt ist, umfasst die Wendeeinrichtung 160 einen bevorzugt auf verschwenkbaren Fahrrollen angeordneten Tragrahmen 162 sowie eine gegenüber diesem um die Drehachse 102 rotierbare Aufnahmeeinrichtung 168, in die die mobilen Press- und Transportbehälter 111 von der Seite her einsetzbar sind. Hierzu besitzt die rotierbare Aufnahmeeinrichtung 168 zwei koaxial zur Drehachse 102 angeordnete Drehringe 170, die drehfest mit der Aufnahmeeinrichtung 168 gekoppelt sind und sich wie in den Figuren 1 bis 3 gezeigt über vier am Tragrahmen 162 angeordnete Stützrollen 172 abstützen, um die Aufnahmeeinrichtung 168 mit einem in diese eingesetzten mobilen Pressbehälter 110 drehbar am Tragrahmen 162 zu lagern. Der Drehwinkel von weniger als 360 ° in jede der beiden Drehrichtungen kann dabei über einen nicht näher gezeigten Anschlag begrenzt werden, welcher bevorzugt verstellbar an einem der Drehringe 170 angeordnet sein kann, und der mit einem nicht näher gezeigten Gegenanschlag am Tragrahmen 162 zusammenwirkt.

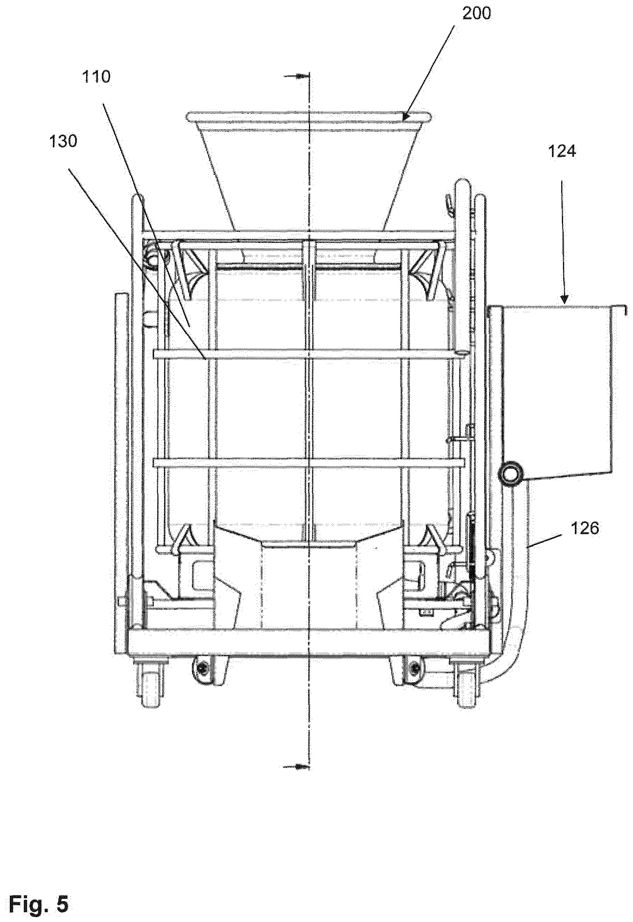

Wie weiterhin in Fig. 1 und 5 gezeigt ist, befindet sich der Saftsammelbehälter 124 bei der bevorzugten Ausführungsform der Erfindung in vorteilhafter Weise oberhalb des Saftablaufs 122, und ist insbesondere am Tragrahmen der Wendeeinrichtung 160 befestigt. Hierdurch ergibt sich der Vorteil, dass der während eines Presszyklus im Saftsammelbehälter gesammelte Saft im Anschluss rein gravitativ in einen weiteren, nicht näher gezeigten Hauptsammelbehälter eingeleitet werden kann, ohne dass eine zusätzliche Pumpe benötigt wird.

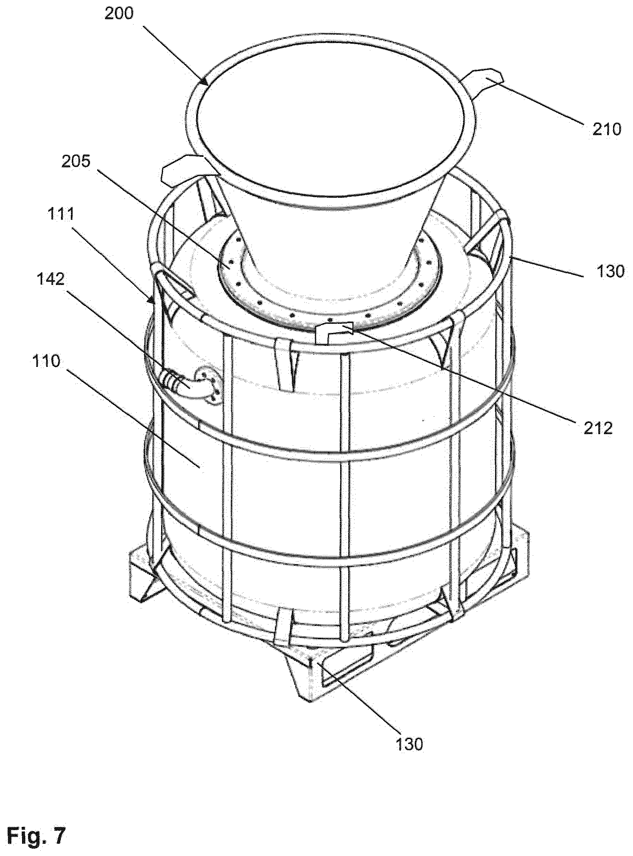

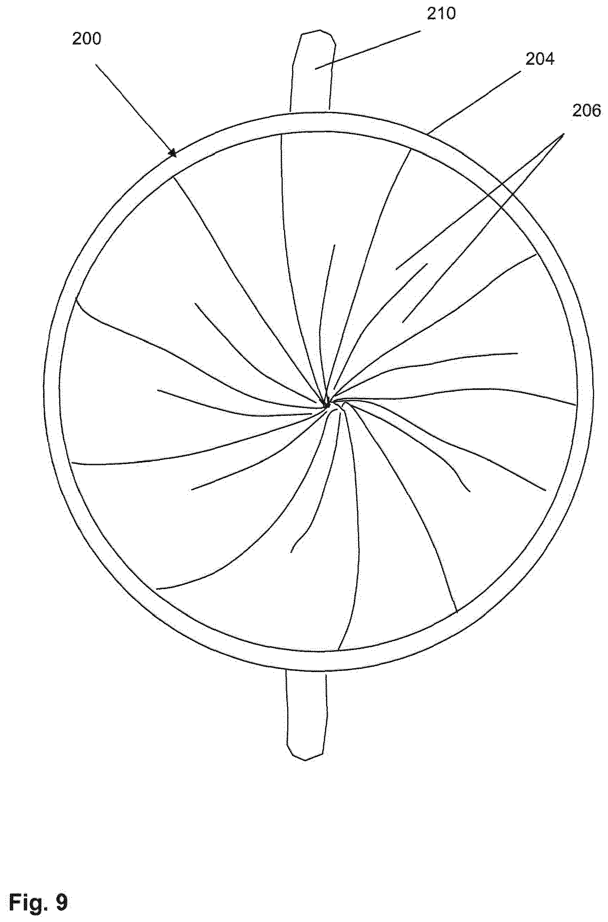

Schließlich kann es bei einer besonders bevorzugten Ausführungsform der Erfindung vorgesehen sein, dass die Befüll- und Entleeröffnung 118 des Pressbehälters 110 durch einen in den Figuren 1, 4, 5, 6 und 7 gezeigten trichterförmigen Verschlussdeckel 200 verschließbar ist, der mit der Befüll- und Entleeröffnung 118 an seiner Unterseite insbesondere über einen Flansch drehfest 205 verbunden ist. Der Verschlussdeckel 200, der nicht nur bei der erfindungsgemäßen Anordnung mit einem flexiblen Pressbehälter 110 zum Einsatz gelangen kann, sondern der grundsätzlich auch bei herkömmlichen Pressbehältern aus Metall oder auch elastischem dickwandigerem Kunststoff verwendbar ist, besteht aus einem flexiblen Werkstoff, bevorzugt einem nicht dehnbaren gummielastischen Werkstoff, wie gewebeverstärktem Gummi oder auch Silikon. Wie in den Figuren 1, 4, 5 und 7 angedeutet ist, kann der trichterförmige Verschlussdeckel 200 aus einer dort gezeigten geöffneten trichterförmigen Einfüllstellung, in welcher ein Durchgangskanal 202 im trichterförmigen Verschlussdeckel 200 freigegeben ist, durch umfängliches Rotieren des oberen Randes 204 relativ zum Pressbehälter 110, bzw. zum Flansch 205, und Absenken des oberen Randes 204 in eine Verschlussstellung bewegt werden, in der der Durchgangskanal 202 durch überlappend übereinander angeordnete Wandabschnitte 206 des trichterförmigen Verschlussdeckels 200 verschlossen wird, wie dies in Fig. 8 und 9 dargestellt ist. Um den trichterförmigen Verschlussdeckel 210 nach dem Rotieren des oberen, der Befüll- und Entleeröffnung 118 abgewandten Randes 204 (in Fig. 7 entgegengesetzt zum Uhrzeigersinn) in die in Fig. 8 und 9 gezeigte Verschlussstellung in dieser zu arretieren, können am oberem Rand 204 des trichterförmigen Verschlussdeckels 200, der durch einen eingearbeiteten Metallring verstärkt sein kann, flügelartige Laschen 210 befestigt sein, die in hakenförmige Eingriffselemente 212 am Stützgestell 130 des Behälters 111 eingreifen. Wie von der Anmelderin gefunden wurde, ergibt sich durch das Verdrillen des elastischen Werkstoffs des trichterförmigen Verschlussdeckels 200 ein in hohem Maße druckdichter Verschluss des Durchgangskanals 202, der das Eindringen von Umgebungsluft wirksam verhindert, wenn während eines Pressvorgangs Unterdruck an den Produktmittelraum 116 angelegt wird.

Ein weiterer Vorteil des elastischen trichterförmigen Verschlussdeckels 200 ist darin zu sehen, dass dieser auch bei einer Verwendung des mobilen Pressbehälters 110 als Sammel- und Transportbehälter 111 im Weinberg am Behälter 111 verbleiben kann, um das Einfüllen der Trauben oder Früchte zu erleichtern, ohne dass ein gesonderter Trichter erforderlich ist.

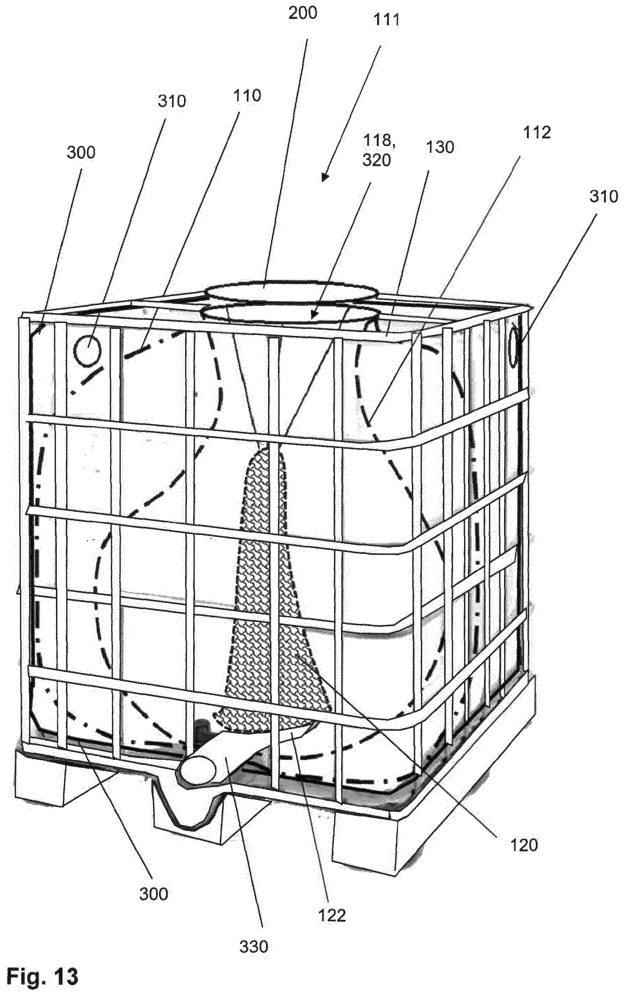

Wie weiterhin in Fig. 13 gezeigt ist, kann der mobile, im Stützgestell 130 aufgenommene Pressbehälter 110 aus flexiblem Kunststoffmaterial in der Ausführungsfonn als mobiler Press- und Transsportbehälter 111, wie dieser zuvor mit Bezug auf Fig. 8 beschrieben wurde, nach einem weiteren der Erfindung zugrunde liegenden Gedanken von einem innerhalb des Stützgestells 130 aufgenommenen Schutzbehälter 300 umgeben sein, in welchem der Pressbehälter 110 aus druckfestem flexiblen Kunststoffmaterial, insbesondere aus einem mehrlagigen flexiblen luftdichten Kunststoffgewebe aufgenommen ist. Wie in Fig. 13 angedeutet ist, sind im Schutzbehälter 300, der aus einem bekannten eigensteifen Kunststoffmaterial, wie z.B. PVC besteht, bevorzugt Entlüftungslöcher 310 geformt, durch die hindurch Luft beim Expandieren und Entspannen des Pressbehälters 110 entweichen, bzw. einströmen kann.

Bei dem Schutzbehälter 300 handelt es sich bevorzugt um einen würfel- bzw. quaderförmigen Standardbehälter, der als in der Landwirtschaft als "IBC-Behälter" bekannt ist, und der eine bodenseitige Stapleraufnahme sowie eine den Schutzbehälter 300 umschließendes Stützgestell 130 aus Stahlrohr besitzt, durch dessen deckenseitige Öffnung 320 der in diesem Falle sackartige flexible Pressbehälter 110 mit der in diesen eingesetzten Pressmembran 112 von oben her eingeführt wird. Die deckelseitige Öffnung 320 im Schutzbehälter 300 kann hierzu nachträglich erweitert sein. Der flexible Pressbehälter 110 hat bevorzugt die Form eines stehenden Zylinders, kann aber auch kugelförmig bzw. teilkugelfönnig ausgestaltet sein. An der Unterseite des sackartigen flexiblen Pressbehälters 110 der Ausführungsfonn von Fig. 13 ist weiterhin ein nicht näher gezeigter Flansch für den Saftablauf 122 druckdicht in diesen eingearbeitet, an welchem das Drainageelement 120 mit seiner Unterseite bevorzugt lösbar befestigt ist, das an seinem oberen Ende z.B. über Halteschnüre am ebenfalls nicht näher gezeigten Flansch der Befüll- und Entleeröffnung 118 fixiert sein kann. Hierdurch wird ein Ausweichen des flexiblen Drainageelements 120 während des Pressvorgangs mit einfachen Mitteln verhindert.

Wie der Darstellung der Fig. 13 weiterhin entnommen werden kann, kann das an den standardisierten IBC-Behältern montierte Auslaufrohr 330 mit dem Saftablauf 122 strömungsmäßig verbunden sein, um das in den standardisierten IBC-Behältern eingesetzte Ablaufventil zum Verschließen sowie zur Freigabe des Saftablaufs 122 zu nutzen. Die zuvor beschriebene Ausführungsform besitzt den Vorteil, dass die standardisierten und sehr kostengünstigen IBC-Behälter als Basis für die mobilen Pressbehälter verwendet werden können, wobei der in der Regel nicht hinreichend druckfeste würfel- bzw. quaderförmige Kunststoffbehälter in vorteilhafter Weise als zusätzlicher Schutzbehälter genutzt wird, der im Falle eines Aufplatzens des flexiblen druckfesten (sackartigen) Pressbehälters 110 die frei werdende Druckenergie aufnimmt und dämpft, so dass die Gefahr von Verletzungen des Bedienpersonals während eines Pressvorgangs in einem solchen Fall in vorteilhafter Weise ausgeschlossen werden kann. Das Einsetzen und Verschwenken des in Fig. 13 gezeigten mobilen Behälters erfolgt ebenfalls in einer der Quader- oder Würfelform des Behälters angepassten Wendeeinrichtung, wie sie zuvor in Zusammenhang mit den Behältern der Fig. 1 bis 5 beschrieben wurde.

### Liste der Bezugszeichen

100 erfindungsgemäße Anordnung
102 Drehachse
110 flexibler Pressbehälter
112 Pressmembran
111 mobiler Press- und Transportbehälter
114 Druckmittelraum
116 Pressmittelraum
118 Befüll- und Entleeröffnung
120 Drainageelement
122 Saftablauf
124 Saftsammelbehälter
124a Luftabsaugöffnung im druckdichten Saftsammelbehälter
124e Safteinlassöffnung im druckdichten Saftsammelbehälter
126 flexibler Schlauch
130 Stützgestell
132 Aufrolleinrichtung für flexiblen Schlauch
134 Schlauchaufnahmetrommel
136 Durchtrittsöffnung in Schlauchaufnahme Trommel
140 Überdruckquelle
142 Druckluftzuleitung
150 Unterdruckquelle
160 Wendeeinrichtung
162 Tragrahmen
164 Schlauchführungseinrichtung
165 Rollen zur Lagerung der Schlauchaufnahmetrommel
166 Zugseil
168 Rotierbare Aufnahmeeinrichtung für Pressbehälter in Wendeeinrichtung
170 Drehringe
172 Stützrollen zur Lagerung der Aufnahmeeinrichtung
200 Trichterförmiger Verschlussdeckel
202 Durchgangskanal im trichterförmigen Verschlussdeckel
204 Rand des trichterförmigen Verschlussdeckels
206 Überlappend angeordnete Wandabschnitte
210 Flügelartige Laschen an oberem Rand des trichterförmigen Verschlussdeckels
205 Flansch
212 Eingriffselemente an Behälter zur Aufnahme der flügelartigen Laschen in Verschlussstellung
300 Schutzbehälter
310 Entlüftungsöffnung im Schutzbehälter
320 Deckenseitige Öffnung im Schutzbehälter
330 Auslaufrohr
Ü1 Überdruckventil
VI erstes Ventil
V2 zweites Ventil
V3 drittes Ventil
V4 viertes Ventil
V5 fünftes Ventil

## Patentansprüche

1. Anordnung (100) zum Auspressen von flüssigkeitshaltigen Stoffen, umfassend einen um eine Drehachse (102) rotierbaren Pressbehälter (110), dessen Behälterinnenraum durch eine Pressmembran (112) in einen Druckmittelraum (114) und einen Pressmittelraum (116) unterteilt ist, wobei im Pressbehälter (110) eine druckdicht verschließbare Befüll- und Entleeröffnung (118) angeordnet ist, über welche flüssigkeitshaltiges Pressgut in den Pressmittelraum (116) einfüllbar ist, und im Pressmittelraum (116) wenigstens ein Drainageelement (120) angeordnet ist, dessen Innenraum mit einem Saftablauf (122) des Pressbehälters (110) kommuniziert, über welchen flüssiger Saft während eines Pressvorgangs einem Saftsammelbehälter (124) zuführbar ist,
**dadurch gekennzeichne,** dass
der Pressbehälter (110) aus einem druckfesten flexiblen Kunststoffmaterial besteht und in einem eigensteifen, um die Drehachse rotierbaren Stützgestell (130) aufgenommen ist.

2. Anordnung nach Anspruch 1,
**dadurch gekennzeichnet, dass**
der Pressbehälter aus einem flexiblen, bevorzugt zwei- oder mehrlagigen mit Kunststoff beschichteten druckfesten Gewebematerial besteht.

3. Anordnung nach Anspruch 1 oder 2,
**dadurch gekennzeichnet, dass**
diese eine Überdruckquelle (140) umfasst, über die ausschließlich der Druckmittelraum während des Pressvorgangs mit einem Überdruck von bis zu 1,5 bar, bevorzugt bis zu 1,2 bar beaufschlagbar ist.

4. Anordnung nach Anspruch 1 oder 2,
**dadurch gekennzeichnet, dass**
diese eine mit dem Druckmittelraum (114) verbindbare Überdruckquelle (140) umfasst, über die der Druckmittelraum (114) während eines Pressvorgangs mit einem maximalen Überdruck von weniger als 0,5 bar beaufschlagbar ist, und dass die Anordnung (100) zusätzlich eine mit dem Pressmittelraum (116) verbindbare Unterdruckquelle (150) umfasst, über die der Pressmittelraum (116) und/oder der Saftablauf (122) während der Beaufschlagung des Druckmittelraums (114) mit Überdruck mit einem Unterdruck zwischen -0,1 bis -0,9 bar beaufschlagbar ist.

5. Anordnung nach Anspruch 4,
**dadurch gekennzeichnet, dass**
die Überdruckquelle (140) über ein erstes Ventil (V1) und eine erste Zuleitung mit dem Druckmittelraum (114) und über einen zwischen der Überdruckquelle (140) und dem ersten Ventil (V1) angeordneten Abzweig sowie eine vom Abzweig zum Pressmittelraum (116) führende, durch ein zweites Ventil (V2) sperrbare zweite Überdruckleitung strömungsmäßig mit dem Pressmittelraum (116) verbindbar ist, dass die Unterdruckquelle (150) über eine vierte Zuleitung und ein in dieser angeordnetes viertes Ventil (V4) mit einer Luftabsaugöffhung (124a) im Saftsammelbehälter (124) verbindbar ist, und dass eine Safteinlassöffnung (124e) im Saftsammelbehälter (124) über eine fünfte, durch ein fünftes Ventil (V5) sperrbare Zuleitung mit dem Pressmittelraum (116) verbindbar ist und/oder dass die zweite Überdruckleitung über einen in der fünften Zuleitung angeordneten zweiten Abzweig und das zweite Ventil (V2) mit der Überdruckquelle (140) verbindbar ist, und die erste Überdruckleitung über einen zwischen dem ersten Ventil (V1) und dem Druckmittelraum (114) angeordneten dritten Abzweig und eine dritte, durch ein drittes Ventil (V3) sperrbare Zuleitung strömungsmäßig mit der Unterdruckquelle (150) verbindbar ist, um den Pressmittelraum (116) bei geschlossenem ersten Ventil (V1) und geschlossenem vierten Ventil (V4) sowie geöffnetem zweiten Ventil (V2), dritten Ventil (V5) und fünften Ventil (V5) zum Anlegen der Pressmembrane (112) an die Innenwand des flexiblen Pressbehälters (110) vor dem Einfüllen von Pressgut mit einem Überdruck zu beaufschlagen.

6. Anordnung nach einem der vorhergehenden Ansprüche,
**dadurch gekennzeichnet, dass**
der Saftablauf (122) während eines Pressvorgangs über einen flexiblen Schlauch (126) dauerhaft strömungsmäßig mit dem Saftsammelbehälter (124) verbunden ist.

7. Anordnung nach einem der vorhergehenden Ansprüche,
**dadurch gekennzeichnet, dass**
das Stützgestell (130) und der darin aufgenommene Pressbehälter (110) aus flexiblem Kunststoffmaterial einen mobilen Press- und Transportbehälter (111) bilden, welcher eigenständig lager- und transportierbar ist.

8. Anordnung nach Anspruch 7,
**dadurch gekennzeichnet, dass**
der eigenständig lager- und transportierbare Press- und Transportbehälter (111) von einem innerhalb des Stützgestells (130) aufgenommenen Schutzbehälter (300) umgeben ist, in welchem der Pressbehälter (110) aus druckfestem flexiblen Kunststoffmaterial aufgenommen ist, wobei im Schutzbehälter (300) Entlüftungslöcher (310) geformt sind, durch welche hindurch Luft beim Expandieren des Pressbehälters (110) entweichen kann.

9. Anordnung nach Anspruch 7 oder 8,
**dadurch gekennzeichnet, dass**
die Anordnung (100) eine Wendeeinrichtung (160) umfasst, in der das Stützgestell (130) und der darin aufgenommene mobile Press- und Transportbehälter (111) temporär aufnehmbar und nach einem Pressvorgangs zur Auflockerung des Pressguts aus einer Befüllposition heraus um einen begrenzten Drehwinkel von bevorzugt jeweils weniger als 360°, insbesondere um weniger als 270°, in zueinander entgegengesetzten Drehrichtungen um eine Drehachse 102 rotierbar sind.

10. Anordnung nach Anspruch 9,
**dadurch gekennzeichnet, dass**
die Wendeeinrichtung (160) eine Aufrolleinrichtung (132) zur Aufnahme des flexiblen Schlauchs (126) beim Verschwenken des mobilen Press- und Transportbehälters (111) in der Wendeeinrichtung (160) umfasst, welche eine unterhalb des Saftablaufs (122) angeordnete Schlauchaufnahmetrommel (134) besitzt, die eine Durchtrittsöffnung (136) aufweist, durch die hindurch ausgepresstes Pressgut (Trester) nach dem Pressvorgang bei geöffneter Befüll- und Entleeröffnung (118) nach dem Rotieren des mobilen Press- und Transportbehälters (111) in eine Entleerstellung, in der sich die Befüll- und Entleeröffnung (118) an der Unterseite des Behälters (111) befindet, austreten kann.

11. Anordnung nach Anspruch 10,
**dadurch gekennzeichnet, dass**
die Schlauchaufnahmetrommel (134) über Rollen (165) in einer horizontalen Ebene rotierbar an der Wendeeinrichtung (160) aufgenommen ist, dass eine koaxial zur Drehachse (102) des Pressbehälters (110) in der Wendeeinrichtung (160) angeordnete Schlauchführungseinrichtung (164) vorgesehen ist, entlang welcher der flexible Schlauch (126) beim Verschwenken des Pressbehälters (110) um die Drehachse (102) herum bewegt wird, und dass die Aufrolleinrichtung (132) mit der Schlauchführungseinrichtung (164) mechanisch über ein insbesondere vorgespanntes und über Rollen umgelenktes Zugseil (166) gekoppelt ist, welches die Rotationsbewegung des Pressbehälters (110) in der Wendeeinrichtung (160) in eine korrespondierende Drehbewegung der Aufrolleinrichtung (132) überführt.

12. Anordnung nach einem der Ansprüche 9 bis 11,
**dadurch gekennzeichnet, dass**
die Wendeeinrichtung (160) einen Tragrahmen (162) sowie eine gegenüber diesem um die Drehachse (102) rotierbare Aufnahmeeinrichtung (168) umfasst, in die der mobile Press- und Transportbehälter (111) von oben oder von der Seite her einsetzbar ist, wobei die rotierbare Aufnahmeeinrichtung (168) zwei koaxial zur Drehachse (102) angeordnete Drehringe (170) besitzt, welche sich über vier am Tragrahmen (162) angeordnete Stützrollen (172) zur drehbaren Lagerung der Aufnahmeeinrichtung (168) mit einem darin eingesetzten mobilen Press- und Transportbehälter (111) am Tragrahmen (162) abstützen.

13. Anordnung nach Anspruch 9,
**dadurch gekennzeichnet, dass**
der Saftsammelbehälter (124) oberhalb des Saftablaufs (122), insbesondere am Tragrahmen (162) der Wendeeinrichtung (160), angeordnet ist.

14. Anordnung nach einem der vorhergehenden Ansprüche oder insbesondere danach, **dadurch gekennzeichnet, dass**
die Befüll- und Entleeröffnung (118) des Pressbehälters (110) durch einen trichterförmigen, mit der Befüll- und Entleeröffnung (118) an seiner Unterseite verbundenen Verschlussdeckel (200) aus einem flexiblem Werkstoff, insbesondere einem gummielastischen Werkstoff, bevorzugt Silikon, verschließbar ist, welcher aus einer geöffneten trichterförmigen Einfüllstellung, in der ein Durchgangskanal (202) im trichterförmigen Verschlussdeckel (200) freigegeben ist, durch umfängliches Rotieren des der Befüll- und Entleeröffnung (118) abgewandten Randes (204) des trichterförmigen Verschlussdeckels (200) relativ zum Pressbehälter (110) in eine Verschlussposition verbringbar ist, in der der Durchgangskanal (202) durch überlappend übereinander angeordnete Wandabschnitte (206) des trichterförmigen Verschlussdeckels (200) verschlossen ist.

## Claims

1. Arrangement (100) for pressing liquid-containing raw materials, comprising a press container (110) which is rotatable about an axis of rotation (102) and the interior of which is divided by a press membrane (112) into a pressure medium chamber (114) and a pressing medium chamber (116), wherein a filling and emptying opening (118) which is closable in a pressure-tight manner is arranged in the press container (110), via which opening liquid-containing pressing material can be introduced into the pressing medium chamber (116), and at least one drainage element (120) is arranged in the pressing medium chamber (116), the interior of which drainage element communicates with a juice outlet (122) of the press container (110), via which liquid juice can be supplied to a juice collecting container (124) during a pressing operation,
**characterized in that**
the press container (110) is composed of a pressure-resistant flexible plastics material and is accommodated in an inherently rigid support framework (130) which is rotatable about the axis of rotation.

2. Arrangement according to Claim 1,
**characterized in that**
the press container is composed of a flexible, preferably two- or multi-layer plastics-coated pressure-resistant fabric material.

3. Arrangement according to Claim 1 or 2,
**characterized in that**
said arrangement comprises a positive pressure source (140) via which exclusively the pressure medium chamber can be charged with a positive pressure of up to 1.5 bar, preferably up to 1.2 bar, during the pressing operation.

4. Arrangement according to Claim 1 or 2,
**characterized in that**
said arrangement comprises a positive pressure source (140) which is connectable to the pressure medium chamber (114) and via which the pressure medium chamber (114) can be charged with a maximum positive pressure of less than 0.5 bar during a pressing operation, and **in that** the arrangement (100) additionally comprises a negative pressure source (150) which is connectable to the pressing medium chamber (116) and via which the pressing medium chamber (116) and/or the juice outlet (122) can be charged with a negative pressure of between -0.1 to - 0.9 bar while the pressure medium chamber (114) is being charged with positive pressure.

5. Arrangement according to Claim 4,
**characterized in that**
the positive pressure source (140) is connectable in terms of flow to the pressing medium chamber (116) via a first valve (V1) and a first supply line to the pressure medium chamber (114) and via a branch arranged between the positive pressure source (140) and the first valve (V1) and also a second positive pressure line leading from the branch to the pressing medium chamber (116) and blockable by a second valve (V2), **in that** the negative pressure source (150) is connectable to an air suction opening (124a) in the juice collecting container (124) via a fourth supply line and a fourth valve (V4) arranged therein, and **in that** a juice inlet opening (124e) in the juice collecting container (124) is connectable to the pressing medium chamber (116) via a fifth supply line which is blockable by a fifth valve (V5), and/or **in that** the second positive pressure line is connectable to the positive pressure source (140) via a second branch arranged in the fifth supply line and the second valve (V2), and the first positive pressure line is connectable in terms of flow to the negative pressure source (150) via a third branch arranged between the first valve (V1) and the pressure medium chamber (114) and a third supply line which is blockable by a third valve (V3) in order to charge the pressing medium chamber (116) with a positive pressure when the first valve (V1) and fourth valve (V4) are closed and the second valve (V2), third valve (V5) and fifth valve (V5) are open for applying the press membrane (112) onto the inner wall of the flexible press container (110) before pressing material is introduced therein.

6. Arrangement according to one of the preceding claims,
**characterized in that**
the juice outlet (122) is permanently connected in terms of flow to the juice collecting container (124) during a pressing operation via a flexible hose (126).

7. Arrangement according to one of the preceding claims,
**characterized in that**
the support framework (130) and the press container (110) accommodated therein composed of flexible plastics material form a mobile press and transport container (111) which can be stored and transported independently.

8. Arrangement according to Claim 7,
**characterized in that**
the press and transport container (111), which can be stored and transported independently, is surrounded by a protective container (300) which is accommodated within the support framework (130) and in which the press container (110) composed of pressure-resistant, flexible plastics material is accommodated, with vent holes (310) through which air can escape during the expansion of the press container (110) being formed in the protective container (300).

9. Arrangement according to Claim 7 or 8,
**characterized in that**
the arrangement (100) comprises a turning device (160) in which the support framework (130) and the mobile press and transport container (111) accommodated therein can be accommodated temporarily and, after a pressing operation, are rotatable in mutually opposite directions of rotation about an axis of rotation (102) by a limited angle of rotation of preferably in each case less than 360°, in particular by less than 270°, out of a filling position in order to loosen the pressing material.

10. Arrangement according to Claim 9,
**characterized in that**
the turning device (160) comprises a retraction device (132) for receiving the flexible hose (126) when the mobile press and transport container (111) is pivoted in the turning device (160), said retraction device having a hose receiving drum (134) which is arranged below the juice outlet (122) and which has a passage opening (136) through which, after the pressing operation, with the filling and emptying opening (118) open after the mobile press and transport container (111) has rotated into an emptying position, in which the filling and emptying opening (118) is located on the underside of the container (111), pressed pressing material (pomace) can escape.

11. Arrangement according to Claim 10,
**characterized in that**
the hose receiving drum (134) is accommodated on the turning device (160) so as to be rotatable in a horizontal plane via rollers (165), **in that** a hose guiding device (164) arranged in the turning device (160) coaxially to the axis of rotation (102) of the press container (110) is provided, along which the flexible hose (126) is moved when the press container (110) is pivoted about the axis of rotation (102), and **in that** the retraction device (132) is mechanically coupled to the hose guiding device (164) via an, in particular, pretensioned traction cable (166) which is deflected via rollers and which converts the rotational movement of the press container (110) in the turning device (160) into a corresponding rotational movement of the retraction device (132).

12. Arrangement according to one of Claims 9 to 11, **characterized in that**
the turning device (160) comprises a supporting frame (162) and a receiving device (168) which is rotatable about the axis of rotation (102) in relation thereto and into which the mobile press and transport container (111) is insertable from above or from the side, the rotatable receiving device (168) having two rotating rings (170) which are arranged coaxially to the axis of rotation (102) and which are supported via four support rollers (172) arranged on the supporting frame (162) for the rotatable mounting of the receiving device (168), with a mobile press and transport container (111) inserted therein, on the supporting frame (162).

13. Arrangement according to Claim 9,
**characterized in that**
the juice collecting container (124) is arranged above the juice outlet (122), in particular on the supporting frame (162) of the turning device (160).

14. Arrangement according to one of the preceding claims or in particular according thereto,
**characterized in that**
the filling and emptying opening (118) of the press container (110) is closable by a funnel-shaped closure lid (200) which is composed of a flexible material, in particular a rubber-elastic material, preferably silicone, and is connected to the filling and emptying opening (118) on its underside and which can be brought from an open, funnel-shaped filling position, in which a through-channel (202) in the funnel-shaped closure lid (200) is opened up, by circumferentially rotating the edge (204) of the funnel-shaped closure lid (200) that faces away from the filling and emptying opening (118) relative to the press container (110) into a closure position, in which the through-channel (202) is closed by overlapping wall sections (206) of the funnel-shaped closure lid (200).

## Revendications

1. Agencement (100) pour le pressage de matières contenant du liquide, comprenant un récipient de pressage (110) pouvant tourner autour d'un axe de rotation (102), dont l'espace intérieur de récipient est divisé par une membrane de pressage (112) en un espace de fluide sous pression (114) et un espace de fluide de pressage (116), une ouverture de remplissage et de vidage (118) qui peut être fermée de manière étanche à la pression étant agencée dans le récipient de pressage (110), par l'intermédiaire de laquelle le produit à presser contenant du liquide peut être introduit dans l'espace de fluide de pressage (116), et dans l'espace de fluide de pressage (116) étant agencé au moins un élément de drainage (120) dont l'espace intérieur communique avec une sortie de jus (122) du récipient de pressage (110), par l'intermédiaire de laquelle du jus liquide peut être amené à un récipient collecteur de jus (124) pendant une opération de pressage,
**caractérisé en ce que**
le récipient de pressage (110) est constitué d'un matériau plastique flexible résistant à la pression et est reçu dans un châssis d'appui (130) à rigidité propre, pouvant tourner autour de l'axe de rotation.

2. Agencement selon la revendication 1,
**caractérisé en ce que**
le récipient de pressage est constitué d'un matériau tissé flexible, de préférence à deux couches ou plus, résistant à la pression, revêtu de matière plastique.

3. Agencement selon la revendication 1 ou 2,
**caractérisé en ce**
**qu'**il comprend une source de surpression (140) par l'intermédiaire de laquelle exclusivement l'espace de fluide sous pression peut être soumis à une surpression de jusqu'à 1,5 bar, de préférence jusqu'à 1,2 bar, pendant l'opération de pressage.

4. Agencement selon la revendication 1 ou 2,
**caractérisé en ce**
**qu'**il comprend une source de surpression (140) pouvant être reliée à l'espace de fluide sous pression (114), par l'intermédiaire de laquelle l'espace de fluide sous pression (114) peut être soumis à une surpression maximale de moins de 0,5 bar pendant une opération de pressage, et **en ce que** l'agencement (100) comprend en outre une source de dépression (150) pouvant être reliée à l'espace de fluide de pressage (116), par l'intermédiaire de laquelle l'espace de fluide de pressage (116) et/ou la sortie de jus (122) peut être soumise à une dépression comprise entre -0,1 et -0,9 bar pendant la soumission de l'espace de fluide sous pression (114) à une surpression.

5. Agencement selon la revendication 4,
**caractérisé en ce que**
la source de surpression (140) peut être reliée en écoulement à l'espace de fluide sous pression (114) par l'intermédiaire d'une première soupape (V1) et d'une première conduite d'alimentation, et à l'espace de fluide de pressage (116) par l'intermédiaire d'une dérivation agencée entre la source de surpression (140) et la première soupape (V1) ainsi que d'une deuxième conduite de surpression menant de la dérivation à l'espace de fluide de pressage (116), pouvant être bloquée par une deuxième soupape (V2), **en ce que** la source de dépression (150) peut être reliée à une ouverture d'aspiration d'air (124a) dans le récipient collecteur de jus (124) par l'intermédiaire d'une quatrième conduite d'alimentation et d'une quatrième soupape (V4) agencée dans celle-ci, et **en ce qu'**une ouverture d'entrée de jus (124e) dans le récipient collecteur de jus (124) peut être reliée à l'espace de fluide de pressage (116) par l'intermédiaire d'une cinquième conduite d'alimentation pouvant être bloquée par une cinquième soupape (V5) et/ou **en ce que** la deuxième conduite de surpression peut être reliée à la source de surpression (140) par l'intermédiaire d'une deuxième dérivation agencée dans la cinquième conduite d'alimentation et de la deuxième soupape (V2), et la première conduite de surpression peut être reliée en écoulement à la source de dépression (150) par l'intermédiaire d'une troisième dérivation agencée entre la première soupape (V1) et l'espace de fluide sous pression (114) et d'une troisième conduite d'alimentation pouvant être bloquée par une troisième soupape (V3), afin de soumettre à une surpression l'espace de fluide de pressage (116) lorsque la première soupape (V1) est fermée et la quatrième soupape (V4) est fermée, ainsi que la deuxième soupape (V2), la troisième soupape (V5) et la cinquième soupape (V5) sont ouvertes, afin d'appliquer la membrane de pressage (112) contre la paroi intérieure du récipient de pressage flexible (110) avant l'introduction du produit à presser.

6. Agencement selon l'une quelconque des revendications précédentes,
**caractérisé en ce que**
la sortie de jus (122) est reliée en permanence en écoulement au récipient collecteur de jus (124) par l'intermédiaire d'un tuyau flexible (126) pendant une opération de pressage.

7. Agencement selon l'une quelconque des revendications précédentes,
**caractérisé en ce que**
le châssis d'appui (130) et le récipient de pressage (110) en matière plastique flexible qui y est reçu forment un récipient de pressage et de transport mobile (111) qui peut être stocké et transporté de manière autonome.

8. Agencement selon la revendication 7,
**caractérisé en ce que**
le récipient de pressage et de transport (111), qui peut être stocké et transporté de manière autonome, est entouré d'un récipient de protection (300) reçu à l'intérieur du châssis d'appui (130), dans lequel est reçu le récipient de pressage (110) en matière plastique flexible résistant à la pression, des trous de ventilation (310) étant formés dans le récipient de protection (300), à travers lesquels de l'air peut s'échapper lors de l'expansion du récipient de pressage (110) .

9. Agencement selon la revendication 7 ou 8,
**caractérisé en ce que**
l'agencement (100) comprend un dispositif de retournement (160), dans lequel le châssis d'appui (130) et le récipient de pressage et de transport mobile (111) qui y est reçu peuvent être reçus temporairement et, après une opération de pressage, peuvent être mis en rotation autour d'un axe de rotation 102, dans des directions de rotation opposées l'une à l'autre, à partir d'une position de remplissage, pour désagréger le produit à presser, d'un angle de rotation limité, de préférence inférieur à 360°, notamment inférieur à 270°.

10. Agencement selon la revendication 9,
**caractérisé en ce que**
le dispositif de retournement (160) comprend un dispositif d'enroulement (132) destiné à recevoir le tuyau flexible (126) lors du pivotement du récipient de pressage et de transport mobile (111) dans le dispositif de retournement (160), lequel possède un tambour de réception de tuyau (134) agencé en dessous de la sortie de jus (122), qui présente une ouverture de passage (136) à travers laquelle le produit pressé (marc) peut sortir après l'opération de pressage lorsque l'ouverture de remplissage et de vidage (118) est ouverte après la rotation du récipient de pressage et de transport mobile (111) dans une position de vidage dans laquelle l'ouverture de remplissage et de vidage (118) se trouve sur le côté inférieur du récipient (111).

11. Agencement selon la revendication 10,
**caractérisé en ce que**
le tambour de réception de tuyau (134) est reçu sur le dispositif de retournement (160) de manière à pouvoir tourner dans un plan horizontal par l'intermédiaire de galets (165), **en ce qu'**il est prévu un dispositif de guidage de tuyau (164) agencé dans le dispositif de retournement (160) coaxialement à l'axe de rotation (102) du récipient de pressage (110), le long duquel le tuyau flexible (126) est déplacé autour de l'axe de rotation (102) lors du pivotement du récipient de pressage (110), et **en ce que** le dispositif d'enroulement (132) est couplé mécaniquement au dispositif de guidage de tuyau (164) par l'intermédiaire d'un câble de traction (166) notamment précontraint et dévié par des galets, qui transforme le mouvement de rotation du récipient de pressage (110) dans le dispositif de retournement (160) en un mouvement de rotation correspondant du dispositif d'enroulement (132).

12. Agencement selon l'une quelconque des revendications 9 à 11,
**caractérisé en ce que**
le dispositif de retournement (160) comprend un cadre porteur (162) ainsi qu'un dispositif de réception (168) pouvant tourner par rapport à celui-ci autour de l'axe de rotation (102), dans lequel le récipient de pressage et de transport mobile (111) peut être inséré par le haut ou par le côté, le dispositif de réception rotatif (168) possédant deux anneaux rotatifs (170) agencés coaxialement à l'axe de rotation (102), qui s'appuient sur le cadre porteur (162) par l'intermédiaire de quatre galets d'appui (172) agencés sur le cadre porteur (162) pour le montage rotatif du dispositif de réception (168) avec un récipient de pressage et de transport mobile (111) inséré dans celui-ci.

13. Agencement selon la revendication 9,
**caractérisé en ce que**
le récipient collecteur de jus (124) est agencé au-dessus de la sortie de jus (122), notamment sur le cadre porteur (162) du dispositif de retournement (160).

14. Agencement selon l'une quelconque des revendications précédentes, ou notamment selon celles-ci,
**caractérisé en ce que**
l'ouverture de remplissage et de vidage (118) du récipient de pressage (110) peut être fermée par un couvercle de fermeture (200) en forme d'entonnoir, relié à l'ouverture de remplissage et de vidage (118) sur son côté inférieur, en un matériau flexible, notamment en un matériau ayant l'élasticité du caoutchouc, de préférence en silicone, qui peut être amené d'une position de remplissage en forme d'entonnoir ouverte, dans laquelle un canal de passage (202) est dégagé dans le couvercle de fermeture (200) en forme d'entonnoir, par une rotation circonférentielle du bord (204) du couvercle de fermeture (200) en forme d'entonnoir, détourné de l'ouverture de remplissage et de vidage (118), par rapport au récipient de pressage (110), dans une position de fermeture dans laquelle le canal de passage (202) est fermé par des sections de paroi (206), agencées les unes au-dessus des autres en chevauchement, du couvercle de fermeture (200) en forme d'entonnoir.
